# EUROPÄISCHE PATENTSCHRIFT

(11) **EP 1 970 431 B1**
(45) Veröffentlichungstag und Bekanntmachung des Hinweises auf die Patenterteilung: **07.09.2016**
(21) Anmeldenummer: 08000952.5
(22) Anmeldetag: 18.01.2008
(51) Int. Cl.: C10L 5/46

(54) **VORRICHTUNG UND VERFAHREN ZUR HYDROTHERMALEN KARBONISIERUNG VON BIOMASSE**
METHOD AND DEVICE FOR HYDROTHERMAL CARBONISATION OF BIOMASS
DISPOSITIF ET PROCÉDÉ DE CARBONISATION HYDROTHERMALE DE BIOMASSES

(30) Priorität: 13.03.2007 DE 102007012112
(43) Veröffentlichungstag der Anmeldung: 17.09.2008
(73) Patentinhaber: Loritus GmbH, 80538 München (DE)
(72) Erfinder: Hilber, Bernhard, 80535 München (DE)
(74) Vertreter: Samson & Partner Patentanwälte mbB

(56) Entgegenhaltungen:
- EP-A1- 1 184 443
- WO-A-99/20717
- WO-A-2007/098645
- WO-A1-2008/095589
- WO-A2-2008/081407
- US-A- 5 354 345
- A. KRUSE, A. GAWLIK: IND. ENG. CHEM. RES., Bd. 42, 2003, Seiten 267-279, XP002485624
- TITIRICI M M ET AL: NEW J. CHEM,, Bd. 31, 8. März 2007 (2007-03-08), Seiten 787-789, XP002481844

## Beschreibung

### GEBIET DER ERFINDUNG

Die Erfindung betrifft eine Vorrichtung und ein Verfahren zur hydrothermalen Karbonisierung von biologischem Material bzw. Biomasse, insbesondere pflanzlichem Material, bei welchen während eines Karbonisierungsprozesses Ausgangsprodukte zugeführt und Endprodukte entnommen werden können.

### HINTERGRUND DER ERFINDUNG

Bei derzeit genutzten industriellen Verfahren zur Umsetzung von Biomasse in Brennstoff, wie der Herstellung von Alkohol, Holzkohle, Biogas oder Biodiesel, kann weder jede Art von Biomasse verwendet werden, noch wird die gesamte Biomasse in die gewünschte Form umgesetzt. So kann beispielsweise zur Herstellung von Biodiesel aus Ölpflanzen nur die Frucht verwendet werden. Zudem muss bei einigen der Prozesse laufend Energie zugeführt werden. Entsprechend schlecht eignen sich diese Produkte um möglichst viel Kohlenstoff dauerhaft zu binden und es der Atmosphäre zu entziehen.

Markus Antonietti, Direktor der Abteilung für Kolloid- und Grenzflächenforschung am Max Planck Institut in Potsdam hat ein Verfahren zur Kohleherstellung aus beliebigen Formen von Biomasse, insbesondere Pflanzenteile, Klärschlamm und/oder Ausscheidungen, entwickelt. In einem schnell ablaufenden Karbonisierungsprozess wird aus Biomasse, Wasser und einem Katalysator als Ausgangsprodukte innerhalb von Stunden zuerst eine Rohöl-ähnliche Flüssigkeit, später Mutterboden, Humus, bei noch längerer Verweildauer Braunkohle und Steinkohle als Endprodukte. Chemisch betrachtet werden bei hohen Temperaturen Kohlenhydrate bzw. Zuckerderivate (Saccharide) unter der Einwirkung von Druck in einem sauren Milieu unter Abspaltung von Wasser zu Kohle umgesetzt. Dabei wird Wärmeenergie frei. Die Eigenschaften der Endprodukte hängen von der Menge an Kohlenhydrate ab, die zu Kohle umgesetzt wurden. Das Verfahren wird hydrothermale Karbonisierung (HTK) genannt und ist zum Beispiel näher in "Max Planck Forschung 2/2006", S. 20-25, beschrieben.

Für größere Anlagen ist jedoch das bekannte Verfahren mit dem Aufheizen der Anlage am Beginn des bekannten Prozesses und das Abkühlen am Ende zu energieaufwendig.

A. Kruse, A. Gawlik "Biomass Conversion in Water at 330-410°C and 30-50 MPa Identification of Key Compounds for Indicating Different Chemical Reaction Pathways", veröffentlicht in Ind. Eng. Chem. Res. 2003, 42, 267-279 beschreibt die Reaktion feuchter Biomasse bei 330, 370 und 410°C sowie bei 30, 40 und 50 MPa. Für das Verfahren wird ein Rührkessel für diskontinuierlichen Betrieb eingesetzt. Im Rührkessel wird Wasser gesteuert erhitzt und dann durch eine Schraubenpresse Biomasse in Rührkessel gedrückt. Nach 15 min wird die Reaktionsmischung auf Normaldruck entspannt und in Gas- und Flüssigphase getrennt.

M.M. Titirici, A. Thomas, M. Antonietti "Back in the Black: hydrothermale carbonization of plant material as an efficient chemical process to treat the CO2 problem?" veröffentlicht in New J. Chem. 2007, 31 787-789 beschreibt den chemischen Prozess der hydrothermalen Karbonisierung in experimenteller Umgebung.

Die WO 99/20717 beschreibt eine Förder- und Mischeinrichtung, die zum Fördern und Mischen in einer Vorrichtung zum Pressen von Feststoffbriketts eingesetzt werden.

Aufgabe der Erfindung ist es daher, eine Anlage und ein Verfahren bereitzustellen, welche einen kontinuierlichen oder quasi kontinuierlichen Ablauf ermöglichen. Insbesondere soll erreicht werden, dass Ausgangsprodukte zugeführt und die Endprodukte entnommen werden können, ohne dass der Karbonisierungsprozess vollständig unterbrochen werden muss.

### KURZFASSUNG DER ERFINDUNG

Zur Lösung der Aufgabe stellt die Erfindung eine Vorrichtung zur hydrothermalen Karbonisierung von biologischem Material nach Anspruch 1 bereit.

Die Lösung der Aufgabe erfolgt auch durch ein Verfahren zur hydrothermalen Karbonisierung von biologischem Material nach Anspruch 18.

Zusätzliche Aspekte der Erfindung und Ausführungsbeispiele ergeben sich aus den abhängigen Ansprüchen, der nachfolgenden Beschreibung und den beigefügten Zeichnungen.

Nach einem Ausführungsbeispiel betrifft die Erfindung eine Vorrichtung zur hydrothermalen Karbonisierung, in deren Druckreaktor ein Karbonisierungsprozess ablaufen kann, bei dem Ausgangsprodukte, insbesondere Biomasse, in Endprodukte, insbesondere Humus und Kohle, umgewandelt wird. Dabei werden die Ausgangsprodukte an einem Einlass in vorgegebenen, vorzugsweise regelmäßigen, Abständen zugeführt und die Endprodukte an einem Auslass in vorgegebenen, vorzugsweise regelmäßigen, Abständen entnommen. Im Druckreaktor befindet sich eine Fördereinrichtung um einen Reaktorinhalt vom Einlass zum Auslass zu bewegen. Da der Karbonisierungsprozess nur unter Bedingungen abläuft in denen Temperatur und Druck innerhalb bestimmter Bereiche liegen, werden diese im und/oder am Druckreaktor gemessen und können gegebenenfalls beispielsweise durch eine Heiz/Kühleinrichtung beeinflusst werden. In Nachverarbeitungsstufen werden die Endprodukte einer weiteren Verwendung angepasst.

Nach einem weiteren Ausführungsbeispiel betrifft die Erfindung ein Verfahren zur hydrothermalen Karbonisierung, bei dem die Ausgangsprodukte für den kontinuierlichen Karbonisierungsprozess in vorgegebenen, vorzugsweise regelmäßigen, Abständen in den Druckreaktor eingebracht werden und Endprodukte in vorgegebenen, vorzugsweise regelmäßigen, Abständen entnommen werden, sobald der Karbonisierungsprozess aus einer Anfangsphase in eine Arbeitsphase übergegangen ist. Die Anfangs- und Endprodukte werden so eingebracht bzw. entnommen, dass eine Reaktorinnentemperatur und ein Reaktorinnendruck in einem bestimmten Bereich bleiben, da der Karbonisierungsprozess sonst zum Erliegen kommen könnte.

### KURZBESCHREIBUNG DER ZEICHNUNG

Weitere Ausführungsformen der Erfindung werden nun beispielhaft und unter Bezug-
- Fig. 1: ein Blockbild eines Ausführungsbeispiels einer Gesamtanlage zur Humus- oder Kohleerzeugung;
- Fig. 2: am Beispiel der Humusproduktion ein Blockbild zur Energiebilanz;
- Fig. 3: ein Blockbild zum Ersatz bisheriger Biogasanlagen durch erfindungsgemäße Vorrichtungen; und
- Fig. 4: das Schema eines. Ausführungsbeispiels einer Vorrichtung zur hydrothermalen Karbonisierung.

Die Zeichnung ist nicht unbedingt maßstabsgetreu, einige Teile sind nur symbolisch dargestellt, Beachtung fand das Prinzip der Erfindung.

### BESCHREIBUNG BEVORZUGTER AUSFÜHRUNGSFORMEN

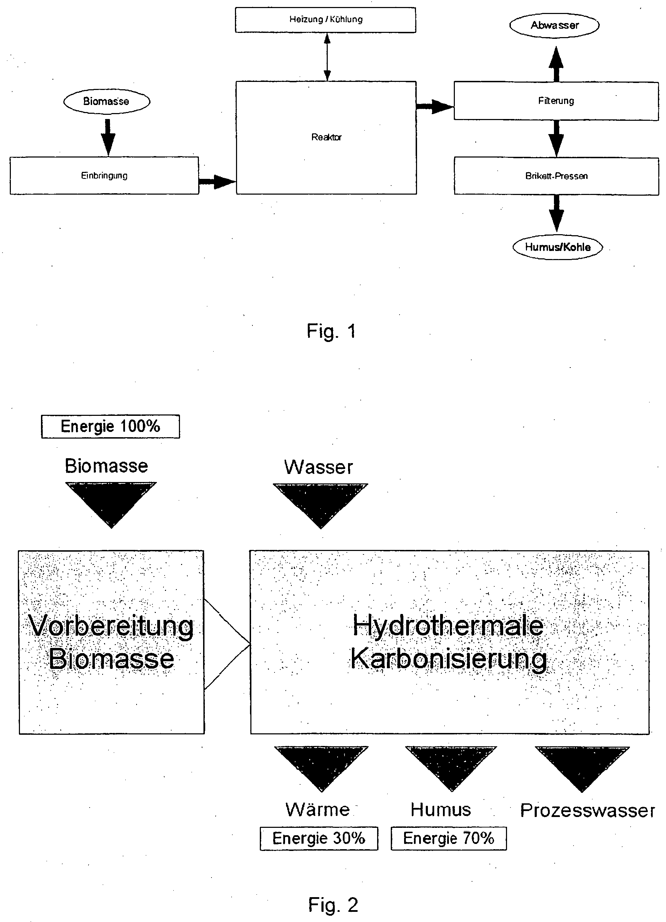

Vor einer detaillierten Beschreibung der Fig. 1 folgen zunächst allgemeine Erläuterungen zum Karbonisierungsprozess und den Ausführungsbeispielen.

In einer Anfangsphase wird ein Druckreaktor der erfindungsgemäßen Vorrichtung zur hydrothermalen Karbonisierung mit biologischem Material (Biomasse) gefüllt und im übrigen bis zu ca. 80% mit Wasser und einem Katalysator aufgefüllt. Der gesamte Reaktorinhalt wird beheizt. Ein Karbonisierungsprozess kann bevorzugt bei Reaktorinnentemperaturen von ungefähr 150°C bis ungefähr 250°C betrieben werden. Bevorzugt beträgt die Reaktorinnentemperatur ungefähr 180-200°C. Dabei steigt ein Reaktorinnendruck mit der Reaktorinnentemperatur und kann ungefähr 10bar bis 25bar betragen. Bevorzugt beträgt der Reaktorinnendruck ungefähr 16bar. Der vorgenannte Katalysator dient bevorzugt zur Anpassung des pH-Werts des Reaktorinhalts. Dieser kann bevorzugt 4 bis 6,5 betragen. Bevorzugt beträgt der pH-Wert ungefähr 5,5. In einer Ausführung kann der Katalysator Zitronensäure sein. In einer anderen Ausführung können Salze verwendet werden. Die Dauer des Karbonisierungsprozesses kann von ungefähr 2 Stunden bis ungefähr 24 Stunden betragen. Dabei ist ein Karbonisierungsgrad eines Endprodukts, also dessen verhältnismäßiger Kohleanteil, von der Dauer des Karbonisierungsprozesses, der Reaktorinnentemperatur und dem Reaktorinnendruck abhängig. Wenn die Reaktorinnentemperatur und der Reaktorinnendruck ausreichend hoch sind, kann der Karbonisierungsprozess kontinuierlich ohne prozessbedingte zeitliche Beschränkung laufen.

Fig. 1 zeigt ein Blockbild einer Gesamtanlage zur Humus- oder Kohleerzeugung mit einer Vorstufe zur Einbringung von Biomasse, einem Reaktor, einer Heiz/Kühleinrichtung sowie Nachverarbeitungsstufen zur Filterung und zum Pressen der Endprodukte. Zur Einbringung kann die Biomasse mechanisch zerkleinert werden und mit Wasser und einem Katalysator vermischt werden. Danach werden diese Ausgangsprodukte dem Druckreaktor zugeführt, in dem der Karbonisierungsprozess stattfindet. Die Heiz/Kühleinrichtung heizt den Druckreaktor in der Anfangsphase, um die Karbonisierung auszulösen, und kühlt den Reaktor, sobald der Karbonisierungsprozess läuft und chemisch ausreichend Wärmeenergie freisetzt. Die abgeführte Wärmeenergie kann weiteren Verwendungen zugeführt werden. Nachdem die Karbonisierung abgeschlossen ist oder den gewünschten Zustand, abhängig von der Prozessdauer, erreicht hat, wird die Füllung aus dem Reaktor üben einen Auslass entnommen. Nachdem die karbonisierten Endprodukte den Druckreaktor verlassen haben, werden sie gefiltert. Das entnommene Endprodukt enthält Wasser, Kohle und Reste der Ausgangsprodukte. Dabei steigt das Verhältnis der Kohleanteile zu den Resten der Ausgangsprodukte mit einer Verweildauer im Reaktor. Bei der Filterung wird den Endprodukten Wasser entzogen, das bei der Einbringung zugeführt wurde oder bei dem Karbonisierungsprozess abgespalten wurde. Die verbleibenden Bestandteile der Endprodukte können in einer weiteren Nachverarbeitungsstufe zu Briketts gepresst werden.

In Fig. 2 ist eine beispielhafte Energiebilanz des Karbonisierungsprozesses zur Humusproduktion mit Trägern der Energie dargestellt. Der hohe Anteil von Wärmeenergie an der Gesamtenergie nach dem Karbonisierungsprozess zeigt, dass die Wärmeenergie wirtschaftlich genutzt werden kann.

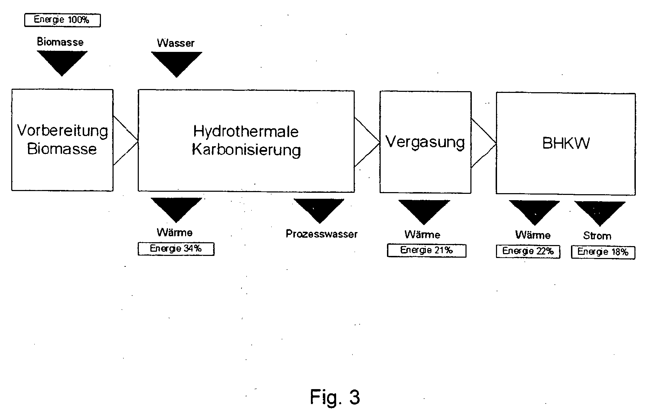

In einer erfindungsgemäßen Prozesskette mit einem Blockheizkraftwerk, wie in Fig. 3 dargestellt, kann der Karbonisierungsprozess genutzt werden, um aus Biomasse in mehreren Schritten sehr effizient Energie zu gewinnen. Als Zwischenschritt zur Verwendung der Endprodukte wird die enthaltene Kohle weiter erwärmt und zu Synthesegas umgesetzt. Das Synthesegas kann in üblichen Gasmotoren insbesondere zur Stromerzeugung eingesetzt werden.

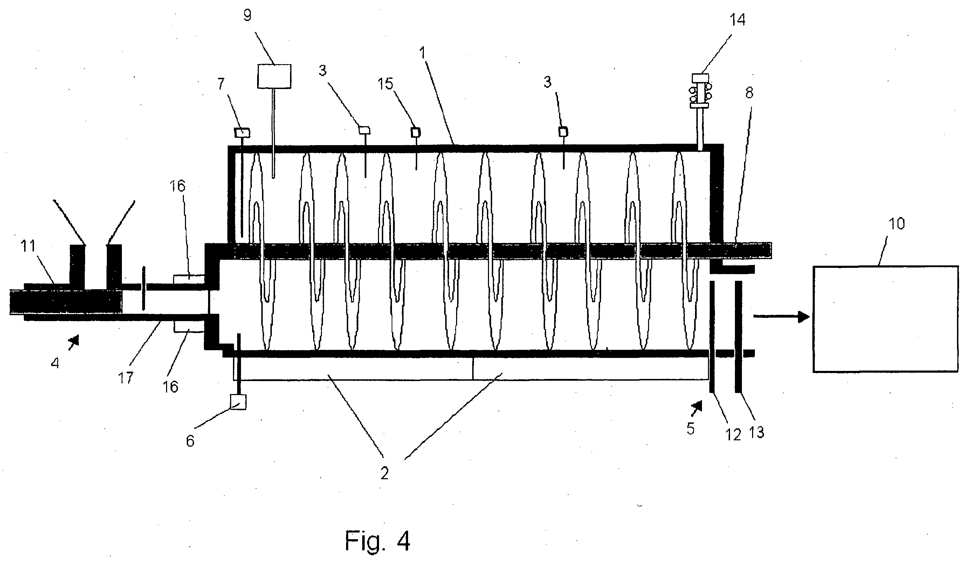

Fig. 4 zeigt schematisch ein Ausführungsbeispiels einer erfindungsgemäßen Vorrichtung zur hydrothermalen Karbonisierung von Biomasse.

Ein Druckreaktor 1 ist im wesentlichen zylinderförmig ausgebildet und verfügt über eine Reaktorwandung, die so ausgeführt ist, dass sie dem Reaktorinnendruck von 10bar bis ungefähr 20bar während des Karbonisierungsprozesses widersteht. An der Reaktorwandung befinden sich Heiz/Kühleinrichtungen 2 und Temperaturmesseinrichtungen 3, sowie Druckmesseinrichtungen 15, die Reaktorinnendruck und Reaktorinnentemperatur erfassen. Die Heiz/Kühleinrichtungen 2 können den Mantel des Druckreaktors 1 vollständig oder teilweise umschließen. Die Temperaturmesseinrichtungen 3 können auch an weiteren Stellen der Vorrichtung angebracht sein.

Durch eine Einlass- bzw. Einbringpumpe 11 werden Ausgangsprodukte an einem Einlass 4 in ein Einlassrohr 17 an einem Ende des Reaktorzylinders eingebracht. Die Einlasspumpe 11 ist derart ausgestaltet, dass auch feste Bestandteile der Ausgangsprodukte bis zu einer gewissen Größe hindurch befördert werden können. Durch die Einlasspumpe 11 werden die Ausgangsprodukte dem Reaktorinnendruck angepasst bzw. unter Druck in das Einlassrohr und weiter durch eine Schleuse in den unter Druck stehenden Reaktorinnenraum befördert. In einer Ausführungsform ist der durch die Einlasspumpe 11 erzeugte Druck etwas höher als der Reaktorinnendruck, damit die Ausgangsprodukte in den Druckreaktor 1 gepresst werden. In einer anderen Ausführungsform werden die Ausgangsprodukte, die dem Reaktor zugeführt werden, durch die nachfolgenden Ausgangsprodukte im Einlassrohr 17 in Richtung Reaktorinnenraum geschoben. Ferner werden die Ausgangsprodukte im Einlassrohr 17 durch eine Heizung 16 vorgeheizt, damit sie schneller in den Karbonisierungsprozess übergehen können. In einer besonderen Ausführung kann dazu die Temperatur der Ausgangsprodukte vor dem Einlass 4 oder im Einlassrohr 17 durch eine Temperaturmesseinrichtung 3 bestimmt werden, die dazu im Einlassrohr 17 angebracht ist. Die Einlasspumpe 11 ist als Kolbenpumpe oder als Exzenterpumpe ausgebildet, die spezielle Ausführungsform der Pumpe ist für eine erfindungsgemäße Ausführung jedoch nicht von Bedeutung.

Die Ausgangsprodukte werden in den Druckreaktor 1 eingebracht und dem Karbonisierungsprozess zugeführt. Sobald der Karbonisierungsprozess bei den eingestellten Druck- und Temperaturbedingungen in den Ausgangsprodukten beginnt, gehen sie sukzessive in Zwischen- und Endprodukte über, die sich vor allem am Boden des Reaktorinnenraums ansammeln. Um diese Zwischen- und Endprodukte leichter aus dem Reaktor heraus zu fördern, ist eine Fördereinrichtung im Innenraum des Druckreaktors 1 vorgesehen, um die Produkte entlang seiner Zylinderachse zu einem Auslass 5 hin zu bewegen bzw. diese Bewegung zu unterstützen. In der dargestellten Ausführungsform ist als Fördereinrichtung ein Schneckenförderer 8 vorgesehen. In einer Ausführungsform ist die Drehachse des Schneckenförderers 8 parallel zur Zylinderachse des Reaktors 1 angeordnet. Durch Drehung des Schneckenförderers 8 werden Zwischenprodukte, in Fig. 4 von links nach rechts, bewegt und zusätzlich miteinander verrührt sowie vom Anhaften an der Reaktorinnenwandung gehindert.

In Fig. 4 sind nur einige Windungen des Schneckenförderers 8 exemplarisch dargestellt. In einer Ausführungsform ist der Schneckenförderer mit Vollschnecke oder Bandschnecke ausgebildet. In einer anderen Ausführungsform umfasst der Schneckenförderer keine ganzen Windungen und ist mit Schaufeln oder Paddeln ausgeführt, die die Zwischenprodukte zusätzlich mischen können. Des Weiteren sind Ausführungsformen denkbar, bei denen mehrere Schneckenförderer ineinander greifen. Auch sind Ausführungen möglich, bei denen ein Schneckenförderer-keine zentrale Welle sondern nur Windungen hat.

In Fig. 4 ist der Auslass 5 als Schleuse ausgeführt mit mindestens zwei in Strömungsrichtung hintereinander angeordneten Ventilen, die im normalen Betrieb alternierend geöffnet werden können, um eine vorgegebnen Menge von Endprodukten zu entnehmen. Wenn der Auslass 5 erreicht ist, sind die Zwischenprodukte in Endprodukte übergegangen und werden in einer bestimmten Menge durch ein erstes Ventil 12 in den Auslassabschnitt 5 eingebracht. Das erste Ventil 12 wird sodann geschlossen. Dann wird ein zweites Ventil 13, das im Normalbetrieb geschlossen ist, geöffnet und der Druck zwischen den beiden Ventilen 12, 13, der vom Reaktorinnendruck herrührt, veranlasst die Endprodukte den Auslassabschnitt 5 durch das zweite Ventil 13 zu verlassen. In einer bevorzugten Ausführungsform sind die Ventile 12, 13 Drehkegelventile.

Durch die erfindungsgemäße Gestaltung der Mittel am Einlass und Auslass, hier im Ausführungsbeispiel der Einlasspumpe 11 und der Ventile 12, 13 im Auslassabschnitt 5, kann ein Durchsatz des Druckreaktors 1 gezielt gesteuert werden. Anhand des Karbonisierungsgrads der Endprodukte kann eine Vorgabe für den Durchsatz generiert werden. Die Endprodukte können einer oder mehrerer Nachverarbeitungsstufen 10 zugeführt werden. In einer der Nachverarbeitungsstufen kann den Endprodukten Wasser entzogen werden. Da das Wasser noch heiß ist, kann es in einer bevorzugten Ausführungsform der Heizung 16 an der Vorrichtung oder einer anderen Anlage zugeführt werden. In einer weiteren Nachverarbeitungsstufe können die Endprodukte zu Briketts gepresst werden oder zu brennbaren Gasen, wie Synthesegas, umgesetzt werden. In einer anderen Nachverarbeitungsstufe können die Endprodukte ohne weitere- Behandlung eingelagert oder, zum Beispiel zu einer Bodenaufwertung, ausgebracht werden,

Zur Unterstützung der Bewegung der Zwischenprodukte im Inneren des Druckreaktor 1 in Richtung Reaktorausgang ist die Vorrichtung zum Auslass 5 hin abfallend geneigt aufgestellt. Der Neigungswinkel beträgt ungefähr 90°.

Eine weitere Messeinrichtung zur Überwachung des Reaktorinhalts ist eine Füllstandsmesseinrichtung 7, über die Differenzen von Durchsätzen am Einlass 4 und am Auslass, 5 festgestellt werden und daraus Vorgaben für eine Steuerung der Einlasspumpe 11 generiert werden. In einer weiteren Ausführungsform kann der pH-Wert der Zwischenprodukte über mindestens eine pH-Wert-Messeinrichtüng 6 erfasst werden und über eine Einspritzvorrichtung 9 durch Zugabe des Katalysators oder von Wasser in einen bevorzugten Bereich gebracht werden. Um einen zu hohen Reaktorinnendruck zu vermeiden ist am Druckreaktor 1 mindestens ein gesteuertes Ventil 14 angebracht, welches ein Überdruckventil ist und das ab einem bestimmten Reaktorinnendruck öffnet. Das gesteuerte Ventil 14 kann dabei selbstgesteuert sein oder mittelbar oder unmittelbar durch ein Signal von einer der Druckmesseinrichtungen 15 gesteuert werden. Zur Betätigung der Heiz/Kühleinrichtungen 2, der Heizung 16, des Schneckenförderers 8, der Einlasspumpe 11, der Einspritzeinrichtung 9, des ersten und zweiten Ventils 12, 13, und des gesteuerten Ventils 14 können eine oder mehrere

Recheneinheiten vorhanden sein, die dazu Signale von den Temperaturmesseinrichtungen 3, den Druckmesseinrichtungen 15, der Füllstandsmesseinrichtung 7 und der pH-Wert-Messeinrichtung 6 empfangen. Am Einlass und am Auslass können sich weitere Ventile befinden(hier nicht dargestellt), die manuell oder automatisch gesteuert werden und die in Ausnahmefällen oder für Reparatur- oder Wartungsarbeiten geschlossen oder geöffnet werden können.

In anderen Ausführungsformen der Erfindung kann sich eine Pumpe am Auslass befinden und der Einlass als Schleuse ausgeführt sein. Anstatt oder zusätzlich zum Schneckenförderer 8 können weitere Fördereinrichtungen wie zum Beispiel ein Transportband im Druckreaktor angebracht sein.

Auch wenn diese Erfindung unter Bezeichnung verschiedener bestimmter Ausführungsformen beschrieben wurde, sind andere Ausführungsformen, die gewöhnlichen Fachmännern mit Blick auf die Veröffentlichung offenkundig sind, auch im Bereich dieser Erfindung. Entsprechend ist bestimmungsgemäß der Bereich der Erfindung nur durch Bezugnahme auf die angehängten Ansprüche definiert.

## Patentansprüche

1. Vorrichtung zur hydrothermalen Karbonisierung von biologischem Material, aufweisend:
einen Druckreaktor (1) mit einem Einlass (4) und einem Auslass (5);
Mess- und Steuerungseinrichtungen; und
mindestens einer Nachverarbeitungseinrichtung (10);
wobei
der Druckreaktor (1) am Ein- und/oder Auslass Mittel aufweist, um in vorgegebenen Abständen Ausgangsprodukte in den Druckreaktor einzubringen und diese dem Karbonisierungsprozess zuzuführen und/oder um Endprodukte aus dem Druckreaktor zu entnehmen,
wobei die Bedingungen für einen Karbonisierungsprozess im Inneren des Druckreaktors (1) im wesentlichen erhalten bleiben, und
der Druckreaktor (1) im wesentlichen vertikal angeordnet ist und im Inneren des Druckreaktors mindestens eine sich vom Einlass zum Auslass erstreckende Fördereinrichtung angeordnet ist, um Ausgangsprodukte während einer Veränderung über Zwischenprodukte zu Endprodukten durch das Innere des Druckreaktors zu bewegen und/oder ein Anhaften von Zwischenprodukten an der Reaktorwandung zu verhindern.

2. Vorrichtung nach Anspruch 1, **dadurch gekennzeichnet, dass** der Einlass (4) ein Pumpenmittel (11) umfasst, mit dem Ausgangsprodukte in den Druckreaktor (1) gegen den Reaktordruck einbringbar sind.

3. Vorrichtung nach Anspruch 1 oder 2, **dadurch gekennzeichnet, dass** der Auslass (5) mindestens zwei in Strömungsrichtung hintereinander angeordnete Ventile umfasst, die im normalen Betrieb alternierend öffenbar sind, um eine vorgegebene Menge von Endprodukten zu entnehmen.

4. Vorrichtung nach Anspruch 1, **dadurch gekennzeichnet, dass** der Auslass (5) eine Pumpe umfasst, mit der Endprodukte aus dem Druckreaktor beförderbar sind, und der Einlass (4) zwei hintereinander gelegene Ventile umfasst, die im normalen Betrieb alternierend offenbar sind, um eine vorgegebnen Menge von Ausgangsprodukten in den Druckreaktor (1) einzubringen.

5. Vorrichtung nach einem der Ansprüche 1 bis 4, **dadurch gekennzeichnet, dass** der Druckreaktor (1) zylinderförmig ausgebildet ist und/oder die Reaktorwandung geeignet ist, Unterschiede zwischen dem Reaktorinnendruck und einem Druck einer Reaktorumgebung auszuhalten.

6. Vorrichtung nach einem der vorstehenden Ansprüche, **dadurch gekennzeichnet, dass** die Steuerungseinrichtungen mindestens eine Heiz-/Kühleinrichtung (2) und mindestens eine Heizung (16) umfasst, die die Reaktorinnentemperatur und eine Temperatur von Ausgangsprodukten steuert.

7. Vorrichtung nach einem der vorstehenden Ansprüche, mit mindestens einer Einspritzeinrichtung (9) für einen Katalysator, der beispielsweise einen pH-Wert im Druckreaktor (1) für den Karbonisierungsprozess verbessert und/oder mindestens einem Überdruckventil (14), über das ein Überdruck im Druckreaktor (1) entweichen kann.

8. Vorrichtung nach einem der vorstehenden Ansprüche, **dadurch gekennzeichnet, dass** die Messeinrichtungen umfassen:
mindestens eine Füllstandsmesseinrichtung (7);
mindestens eine pH-Wert-Messeinrichtung (6);
mindestens eine Temperaturmesseinrichtung (3); und/oder
mindestens eine Druckmesseinrichtung (15); wobei
Messwerte an mindestens eine Recheneinheit weiterleitbar sind, um Vorgaben für eine Prozesssteuerung zu erzeugen.

9. Vorrichtung nach einem der vorstehenden Ansprüche, **dadurch gekennzeichnet, dass** das Fördermittel ausgestaltet ist, um Endprodukte am Auslass aus dem Reaktor zu fördern.

10. Vorrichtung nach einem der vorstehenden Ansprüche, **dadurch gekennzeichnet, dass** der Druckreaktor mit einem Gefälle zwischen Einlass (4) und Auslass (5) zur Förderung des der Karbonisierung unterworfenen biologischen Materials ausgestattet ist.

11. Vorrichtung nach einem der vorstehenden Ansprüche, **dadurch gekennzeichnet, dass** der Druckreaktor (1) zumindest teilweise mit einem Fluid auffüllbar ist.

12. Vorrichtung nach einem der vorstehenden Ansprüche, **dadurch gekennzeichnet, dass** der Druckreaktor (1) im Inneren mit einem Schneckenförderer (8) ausgestattet ist.

13. Vorrichtung nach einem der vorstehenden Ansprüche, dass der Druckreaktor (1) im Inneren mit einer zentrisch oder exzentrisch gelagerten Rühreinrichtung ausgestattet ist, um Zwischenprodukte zu verrühren.

14. Vorrichtung nach einem der vorstehenden Ansprüche, **dadurch gekennzeichnet, dass** in einer dem Auslass nachgeschalteten Nachverarbeitungseinrichtung (10) derart vorgesehen ist, dass Endprodukten in einer ersten Nachverarbeitungsstufe Wasser entzogen wird und sie abgekühlt werden.

15. Vorrichtung nach Anspruch 15, **dadurch gekennzeichnet, dass** in einer zweiten Nachverarbeitungsstufe aus Endprodukten durch erhitzen brennbare Gase gewinnbar sind.

16. Vorrichtung nach einem der Ansprüche 15 und 16, **dadurch gekennzeichnet, dass** Endprodukte in einer dritten Nachverarbeitungsstufe, die der ersten Nachverarbeitungsstufe nachgeschaltet ist, in eine Darreichungsform für Trockenbrennstoff bringbar sind.

17. Vorrichtung nach einem der vorstehenden Ansprüche, **dadurch gekennzeichnet, dass** die Heiz/Kühleinrichtung (2) Leitungen mit einem Fluid umfasst, die zumindest teilweise im und/oder am Druckreaktor (1) verlaufen und dem Druckreaktor (1) nach Bedarf Wärmeenergie zuführen oder eine Wärmeenergie, die bei dem Karbonisierungsprozess im Druckreaktor (1) entsteht, abführen und einer weiteren Verwendungen am Druckreaktor (1), am Einlass (4), einer der Nachverarbeitungsstufen (10) und/oder anderen Anlagen zuführbar sind.

18. Verfahren zur hydrothermalen Karbonisierung von biologischem Material, bei welchem ein Druckreaktor (1) während eines laufenden Karbonisierungsprozesses kontinuierlich oder quasikontinuierlich mit Ausgangsprodukten gespeist wird und Endprodukte entnommen werden, wobei:
die Ausgangsprodukte über einen Einlass (4) derart in den Druckreaktor (1) eingebracht werden, und die Endprodukte über einen Auslass (5) derart aus dem Druckreaktor (1) entnommen werden, dass sich die Reaktorinnentemperatur und der Reaktorinnendruck nur in solchen Grenzen ändern, dass die Bedingungen für einen Karbonisierungsprozess im Inneren des Druckreaktors (1) im wesentlichen erhalten bleiben,
der Druckreaktor in einer im wesentlichen vertikalen Anordnung betrieben wird, und
eine im Inneren des Druckreaktors (1) angeordnete, sich vom Einlass zum Auslass erstreckende Fördereinrichtung Ausgangsprodukte während der Veränderung über Zwischenprodukte zu Endprodukten durch das Innere des Druckreaktors bewegt und/oder ein Anhaften von Zwischenprodukten verhindert.

19. Verfahren nach Anspruch 18, **dadurch gekennzeichnet, dass** Ausgangsprodukte in vorgegebenen Chargen über ein Pumpenmittel (11) durch den Einlass (4) in den Druckreaktor (1) eingebracht werden, und Endprodukte in vorgegebenen Chargen über den Auslass (5) mittels mindestens zwei in Strömungsrichtung hintereinander angeordneter Ventile entnommen werden, die im normalen Betrieb alternierend geöffnet werden, um die vorgegebne Menge von Endprodukten zu entnehmen.

20. Verfahren nach Anspruch 19, **dadurch gekennzeichnet, dass** Endprodukte mit einer Pumpe über den Auslass (5) dem Druckreaktor (1) entnommen werden, und Ausgangsprodukte über den Einlass (4) mit zwei hintereinander angeordneten Ventilen, die alternierend geöffnet werden, eingebracht werden, um die vorgegebne Menge von Ausgangsprodukten einzuführen.

21. Verfahren nach einem der Ansprüche 18 bis 20, **dadurch gekennzeichnet, dass** die Reaktorinnentemperatur über mindestens eine Heiz/Kühleinrichtungen (2) eingestellt wird, wobei unterhalb einer ersten Temperatur dem Druckreaktor (1) Wärme zugeführt wird, oberhalb der ersten Temperatur eine Wärmemenge, die aus dem Karbonisierungsprozess hervorgeht, zur Reaktorinnentemperatur beiträgt und oberhalb einer zweiten Temperatur eine Wärmemenge von dem Druckreaktor (1) abgeführt wird, wobei die Reaktorinnentemperatur in einem Bereich gehalten wird, in dem der Reaktorinnendruck eine geforderte Qualität von Endprodukten liefert und/oder einen zulässigen maximalen Reaktorinnendruck nicht überschreitet.

22. Verfahren nach einem der Ansprüche 18 bis 21, **dadurch gekennzeichnet, dass** Ausgangsprodukten vor dem Einbringen in den Druckreaktor (1) vorgeheizt werden.

23. Verfahren nach einem der Ansprüche 18 bis 22, **dadurch gekennzeichnet, dass** die Wärmemenge, die aus dem Druckreaktor (1) abgeführt wird, und/oder eine Wärmemenge, die von Endprodukten abgeführt wird, einer weiteren Verwendung am Druckreaktor (1), an Nachverarbeitungsstufen und/oder an anderen Anlagen zugeführt wird.

24. Verfahren nach einem der Ansprüche 18 bis 23, **dadurch gekennzeichnet, dass** Ausgangsprodukten und/oder Zwischenprodukten ein Katalysator zugefügt wird.

25. Verfahren nach einem der Ansprüche 18 bis 24, wobei ein mittlerer Durchsatz von Ausgangsprodukten und gewünschten Eigenschaften von Endprodukten abhängt.

26. Verfahren nach einem der Ansprüche 18 bis 25, **dadurch gekennzeichnet, dass** eine Rühreinrichtung Zwischenprodukte verrührt.

27. Verfahren nach Anspruch 26, **dadurch gekennzeichnet, dass** die Rühreinrichtung ein Anhaften von Zwischenprodukten an der Reaktorwandung verhindert.

28. Verfahren nach einem der Ansprüche 18 bis 27, **dadurch gekennzeichnet, dass** das Fördermittel Zwischenprodukte verrührt.

29. Verfahren nach einem der Ansprüche 18 bis 28, **dadurch gekennzeichnet, dass** Endprodukten, nachdem sie den Druckreaktor (1) über den Auslass (5) verlassen, in einer ersten Nachverarbeitungsstufe Wasser entzogen wird und sie abgekühlt werden.

30. Verfahren nach einem der Ansprüche 18 bis 29, **dadurch gekennzeichnet, dass** aus Endprodukten in einer zweiten Nachverarbeitungsstufe brennbare Gase gewonnen werden.

31. Verfahren nach einem der Ansprüche 18 bis 30, **dadurch gekennzeichnet, dass** Endprodukte in einer dritten Nachverarbeitungsstufe, die der ersten Nachverarbeitungsstufe nachgeschaltet ist, in eine Darreichungsform für Trockenbrennstoff gebracht werden.

## Claims

1. Apparatus for hydrothermal carbonization of biological material, comprising:
a pressure reactor (1) having an inlet (4) and an outlet (5);
measurement and control units; and
at least one further processing unit (10);
wherein
the pressure reactor (1) has, at the inlet and/or outlet, means of introducing starting materials into the pressure reactor at given intervals and supplying them to the carbonization process and/or for removing end products from the pressure reactor,
wherein the conditions for a carbonization process within the pressure reactor (1) are essentially maintained, and
the pressure reactor (1) is arranged essentially vertically and at least one conveying unit which extends from the inlet to the outlet is arranged within the pressure reactor, in order to move starting materials through the interior of the pressure reactor during a transformation through intermediates to end products and/or prevent adhesion of intermediates to the reactor wall.

2. Apparatus according to Claim 1, **characterized in that** the inlet (4) comprises a pumping means (11) with which starting materials can be introduced into the pressure reactor (1) against the reactor pressure.

3. Apparatus according to Claim 1 or 2, **characterized in that** the outlet (5) comprises at least two valves arranged successively in flow direction which can be opened alternately in normal operation in order to remove a given amount of end products.

4. Apparatus according to Claim 1, **characterized in that** the outlet (5) comprises a pump with which end products can be conveyed out of the pressure reactor, and the inlet (4) comprises two valves connected in series which can be opened alternately in normal operation in order to introduce a given amount of starting materials into the pressure reactor (1).

5. Apparatus according to any of Claims 1 to 4, **characterized in that** the pressure reactor (1) is cylindrical and/or the reactor wall is suitable for withstanding differences between the internal reactor pressure and a pressure of a reactor environment.

6. Apparatus according to any of the preceding claims, **characterized in that** the control units comprise at least one heating/cooling unit (2) and at least one heater (16) which controls the internal reactor temperature and a temperature of starting materials.

7. Apparatus according to any of the preceding claims, having at least one injection unit (9) for a catalyst which, for example, improves a pH in the pressure reactor (1) for the carbonization process and/or at least one excess pressure valve (14) through which excess pressure in the pressure reactor (1) can escape.

8. Apparatus according to any of the preceding claims, **characterized in that** the measurement units comprise:
at least one fill level measurement unit (7);
at least one pH measurement unit (6);
at least one temperature measurement unit (3); and/or
at least one pressure measurement unit (15); wherein
measurements can be passed on to at least one calculation unit in order to produce parameters for a process control system.

9. Apparatus according to any of the preceding claims, **characterized in that** the conveying means is configured to convey end products out of the reactor at the outlet.

10. Apparatus according to any of the preceding claims, **characterized in that** the pressure reactor is equipped with a gradient between inlet (4) and outlet (5) for conveying of the biological material subjected to the carbonization.

11. Apparatus according to any of the preceding claims, **characterized in that** the pressure reactor (1) can be filled at least partly with a fluid.

12. Apparatus according to any of the preceding claims, **characterized in that** the pressure reactor (1) is equipped with an internal screw conveyor (8).

13. Apparatus according to any of the preceding claims, **characterized in that** the pressure reactor (1) is equipped with an internal centrically or eccentrically mounted stirrer unit in order to stir intermediates.

14. Apparatus according to any of the preceding claims, **characterized in that**, in a further processing unit (10) connected downstream of the outlet, end products are dehydrated and cooled in a first further processing stage.

15. Apparatus according to Claim 15, **characterized in that**, in a second further processing stage, combustible gases can be obtained from end products by heating.

16. Apparatus according to either of Claims 15 and 16, **characterized in that** end products can be converted to a presentation form for dry fuel in a third further processing stage connected downstream of the first further processing stage.

17. Apparatus according to any of the preceding claims, **characterized in that** the heating/cooling unit (2) comprises conduits containing a fluid which run at least partly within and/or to the pressure reactor (1) and supply thermal energy to the pressure reactor (1) if required or remove thermal energy which arises in the carbonization process in the pressure reactor (1), and can be fed to a further use in the pressure reactor (1), at the inlet (4), one of the further processing stages (10) and/or other plants.

18. Method of hydrothermal carbonization of biological material, in which a pressure reactor (1) is fed continuously or quasi-continuously with starting materials and end products are withdrawn during an ongoing carbonization process, wherein:
the starting materials are introduced into the pressure reactor (1) via an inlet (4), and the end products are withdrawn from the pressure reactor (1) via an outlet (5), in such a way that the internal reactor temperature and the internal reactor pressure vary only within such limits that the conditions for a carbonization process within the pressure reactor (1) are essentially maintained,
the pressure reactor is operated in an essentially vertical arrangement, and
a conveying unit which extends from the inlet to the outlet and is arranged within the pressure reactor (1) moves starting materials through the interior of the pressure reactor during the transformation through intermediates to end products and/or prevents adhesion of intermediates.

19. Method according to Claim 18, **characterized in that** starting materials are introduced into the pressure reactor (1) through the inlet (4) in given batches via a pumping means (11), and end products are withdrawn via the outlet (5) in given batches by means of at least two valves arranged successively in flow direction which are opened alternately in normal operation, in order to remove the given amount of end products.

20. Method according to Claim 19, **characterized in that** end products are withdrawn from the pressure reactor (1) via the outlet (5) with a pump, and starting materials are introduced via the inlet (4) with two valves arranged in succession which are opened alternately, in order to introduce the given amount of starting materials.

21. Method according to any of Claims 18 to 20, **characterized in that** the internal reactor temperature is adjusted by means of at least one heating/cooling unit (2), with supply of heat to the pressure reactor (1) below a first temperature, with contribution of an amount of heat which arises from the carbonization process to the internal reactor temperature above the first temperature, and with removal of an amount of heat from the pressure reactor (1) above a second temperature, the internal reactor temperature being kept within a range in which the internal reactor pressure gives a required quality of end products and/or does not exceed a permissible maximum internal reactor pressure.

22. Method according to any of Claims 18 to 21, **characterized in that** starting materials are preheated before being introduced into the pressure reactor (1).

23. Method according to any of Claims 18 to 22, **characterized in that** the amount of heat which is removed from the pressure reactor (1) and/or an amount of heat which is removed from end products is sent to a further use in the pressure reactor (1), in further processing stages and/or in other plants.

24. Method according to any of Claims 18 to 23, **characterized in that** a catalyst is added to starting materials and/or intermediates.

25. Method according to any of Claims 18 to 24, wherein a mean throughput depends on starting materials and desired properties of end products.

26. Method according to any of Claims 18 to 25, **characterized in that** a stirrer unit stirs intermediates.

27. Method according to Claim 26, **characterized in that** the stirrer unit prevents adhesion of intermediates to the reactor wall.

28. Method according to any of Claims 18 to 27, **characterized in that** the conveying means stirs intermediates.

29. Method according to any of Claims 18 to 28, **characterized in that** end products, after they have left the pressure reactor (1) via the outlet (5), are dehydrated and cooled in a first further processing stage.

30. Method according to any of Claims 18 to 29, **characterized in that** combustible gases are obtained from end products in a second further processing stage.

31. Method according to any of Claims 18 to 30, **characterized in that** end products, in a third further processing stage downstream of the first further processing stage, are converted to a presentation form for dry fuel.

## Revendications

1. Dispositif pour la carbonisation hydrothermale d'un matériau biologique, présentant :
un réacteur sous pression (1) pourvu d'une entrée (4) et d'une sortie (5) ;
des systèmes de mesure et de commande ; et
au moins un système de posttraitement (10);
dans lequel
le réacteur sous pression (1) présente, au niveau de l'entrée et/ou de la sortie, des moyens afin d'introduire dans le réacteur sous pression des produits de départ à des intervalles prédéfinis et de les amener au processus de carbonisation et/ou afin de prélever des produits finis du réacteur sous pression,
dans lequel les conditions pour un processus de carbonisation restent sensiblement maintenues à l'intérieur du réacteur sous pression (1), et
le réacteur sous pression (1) est disposé sensiblement de manière verticale et au moins un système de transport s'étendant de l'entrée vers la sortie est disposé à l'intérieur du réacteur sous pression afin de déplacer des produits de départ, au cours d'un changement pour obtenir des produits finis en passant par des produits intermédiaires, à travers l'intérieur du réacteur sous pression et/ou afin d'empêcher une adhérence de produits intermédiaires au niveau de la paroi de réacteur.

2. Dispositif selon la revendication 1, **caractérisé en ce que** l'entrée (4) comprend un moyen de pompage (11), à l'aide duquel des produits de départ peuvent être introduits dans le réacteur sous pression (1) à l'encontre de la pression de réacteur.

3. Dispositif selon la revendication 1 ou 2, **caractérisé en ce que** la sortie (5) comprend au moins deux soupapes disposées les unes derrière les autres dans le sens d'écoulement, lesquelles peuvent être ouvertes en alternance en fonctionnement normal afin de prélever une quantité spécifiée de produits finis.

4. Dispositif selon la revendication 1, **caractérisé en ce que** la sortie (5) comprend une pompe, à l'aide de laquelle des produits finis peuvent être transportés hors du réacteur sous pression, et **en ce que** l'entrée (4) comprend deux soupapes placées l'une derrière l'autre, lesquelles peuvent être ouvertes en alternance en fonctionnement normal afin d'introduire une quantité spécifiée de produits de départ dans le réacteur sous pression (1).

5. Dispositif selon l'une quelconque des revendications 1 à 4, **caractérisé en ce que** le réacteur sous pression (1) est réalisé de manière à présenter une forme cylindrique, et/ou **en ce que** la paroi de réacteur est adaptée pour supporter des différences entre la pression intérieure de réacteur et une pression d'un environnement de réacteur.

6. Dispositif selon l'une quelconque des revendications précédentes, **caractérisé en ce que** les systèmes de commande comprennent au moins un système de chauffage/de refroidissement (2) et au moins un chauffage (16), qui commande la température intérieure de réacteur et une température de produits de départ.

7. Dispositif selon l'une quelconque des revendications précédentes, comprenant au moins un système d'injection (9) pour un catalyseur, qui améliore par exemple une valeur pH dans le réacteur sous pression (1) pour le processus de carbonisation, et/ou comprenant au moins une soupape de surpression (14), par l'intermédiaire de laquelle une surpression dans le réacteur sous pression (1) peut s'échapper.

8. Dispositif selon l'une quelconque des revendications précédentes, **caractérisé en ce que** les systèmes de mesure comprennent :
au moins un système de mesure de niveau de remplissage (7) ;
au moins un système de mesure de valeur pH (6) ;
au moins un système de mesure de température (3) ; et/ou
au moins un système de mesure de pression (15) ; dans lequel
des valeurs de mesure peuvent être transférées à au moins une unité de calcul afin de produire des spécifications pour une commande de processus.

9. Dispositif selon l'une quelconque des revendications précédentes, **caractérisé en ce que** le moyen de transport est configuré afin de transporter des produits finis au niveau de la sortie hors du réacteur.

10. Dispositif selon l'une quelconque des revendications précédentes, **caractérisé en ce que** le réacteur sous pression est configuré avec une pente entre l'entrée (4) et la sortie (5) afin de transporter le matériau biologique soumis à la carbonisation.

11. Dispositif selon l'une quelconque des revendications précédentes, **caractérisé en ce que** le réacteur sous pression (1) peut être rempli au moins en partie d'un fluide.

12. Dispositif selon l'une quelconque des revendications précédentes, **caractérisé en ce que** le réacteur sous pression (1) est équipé à l'intérieur avec un transporteur à vis (8).

13. Dispositif selon l'une quelconque des revendications précédentes, **caractérisé en ce que** le réacteur sous pression (1) est équipé à l'intérieur avec un système agitateur monté au centre ou de manière excentrique afin de mélanger des produits intermédiaires.

14. Dispositif selon l'une quelconque des revendications précédentes, **caractérisé en ce qu'**il est prévu dans un système de posttraitement (10) installé en aval de la sortie que de l'eau est prélevée des produits finis lors d'une première phase de posttraitement et qu'ils sont refroidis.

15. Dispositif selon la revendication 15, **caractérisé en ce que** des gaz combustibles par réchauffage peuvent être obtenus lors d'une deuxième phase de posttraitement à partir de produits finis.

16. Dispositif selon l'une quelconque des revendications 15 et 16, **caractérisé en ce que** des produits finis peuvent être amenés sous une forme d'administration pour un combustible sec lors d'une troisième phase de posttraitement, qui a lieu après la première phase de posttraitement.

17. Dispositif selon l'une quelconque des revendications précédentes, **caractérisé en ce que** le système de chauffage/de refroidissement (2) comprend des conduits comprenant un fluide, qui s'étendent au moins en partie dans et/ou au niveau du réacteur sous pression (1) et qui amènent au réacteur sous pression (1), si besoin, une énergie thermique ou qui évacuent une énergie thermique, qui apparaît dans le réacteur sous pression (1) lors du processus de carbonisation, et qui peuvent être amenés pour une autre utilisation au niveau du réacteur sous pression (1), au niveau de l'entrée (4), au niveau de l'une des phases de posttraitement (10) et/ou au niveau d'autres installations.

18. Procédé pour la carbonisation hydrothermale d'un matériau biologique, dans lequel un réacteur sous pression (1) est alimenté, pendant un processus de carbonisation en cours, en continu ou quasiment en continu, avec des produits de départ et des produits finis sont prélevés, où :
les produits de départ sont introduits par l'intermédiaire d'une entrée (4) dans le réacteur sous pression (1) et les produits finis sont prélevés par l'intermédiaire d'une sortie (5) hors du réacteur sous pression (1) d'une manière telle que la température intérieure de réacteur et la pression intérieure de réacteur varient seulement dans des limites telles que les conditions pour un processus de carbonisation à l'intérieur du réacteur sous pression (1) restent sensiblement maintenues,
le réacteur sous pression fonctionne dans un agencement sensiblement vertical, et
un système de transport disposé à l'intérieur du réacteur sous pression (1), s'étendant depuis l'entrée en direction de la sortie déplace des produits de départ au cours du changement afin d'obtenir des produits finis en passant par des produits intermédiaires, à travers l'intérieur du réacteur sous pression et/ou empêche une adhérence de produits intermédiaires.

19. Procédé selon la revendication 18, **caractérisé en ce que** des produits de départ sont introduits dans des lots spécifiés par l'intermédiaire d'un moyen de pompage (11) par l'entrée (4) dans le réacteur sous pression (1), **en ce que** des produits finis sont prélevés dans des lots spécifiés par l'intermédiaire de la sortie (5) au moyen au moins de deux soupapes disposées l'une derrière l'autre dans le sens d'écoulement, lesquelles sont ouvertes en alternance en fonctionnement normal afin de prélever la quantité spécifiée de produits finis.

20. Procédé selon la revendication 19, **caractérisé en ce que** des produits finis sont prélevés du réacteur sous pression (1) à l'aide d'une pompe par l'intermédiaire de la sortie (5), et **en ce que** des produits de départ sont introduits par l'intermédiaire de l'entrée (4) à l'aide de deux soupapes disposées l'une derrière l'autre, lesquelles sont ouvertes en alternance afin d'introduire la quantité spécifiée de produits de départ.

21. Procédé selon l'une quelconque des revendications 18 à 20, **caractérisé en ce que** la température intérieure de réacteur est réglée par l'intermédiaire au moins d'un système de chauffage/de refroidissement (2), dans lequel en dessous d'une première température de la chaleur est amenée au réacteur sous pression (1), au-dessus de la première température une quantité de chaleur issue du processus de carbonisation participe à la température intérieure de réacteur et, au-dessus d'une deuxième température une quantité de chaleur est évacuée du réacteur sous pression (1), dans lequel la température intérieure de réacteur est maintenue dans une plage dans laquelle la pression intérieure de réacteur fournit une qualité de produits finis requise et/ou ne dépasse pas une pression intérieure de réacteur maximale autorisée.

22. Procédé selon l'une quelconque des revendications 18 à 21, **caractérisé en ce que** des produits de départ sont préchauffés avant l'introduction dans le réacteur sous pression (1).

23. Procédé selon l'une quelconque des revendications 18 à 22, **caractérisé en ce que** la quantité de chaleur qui est évacuée hors du réacteur sous pression (1), et/ou une quantité de chaleur qui est évacuée des produits finaux, sont amenées pour une autre utilisation au niveau du réacteur sous pression (1), au niveau de phases de posttraitement et/ou au niveau d'autres installations.

24. Procédé selon l'une quelconque des revendications 18 à 23, **caractérisé en ce qu'**un catalyseur est ajouté aux produits de départ et/ou aux produits intermédiaires.

25. Procédé selon l'une quelconque des revendications 18 à 24, dans lequel un débit moyen dépend des produits de départ et de propriétés souhaitées de produits finis.

26. Procédé selon l'une quelconque des revendications 18 à 25, **caractérisé en ce qu'**un système agitateur mélange des produits intermédiaires.

27. Procédé selon la revendication 26, **caractérisé en ce que** le système agitateur empêche une adhérence de produits intermédiaires au niveau de la paroi de réacteur.

28. Procédé selon l'une quelconque des revendications 18 à 27, **caractérisé en ce que** le moyen de transport mélange des produits intermédiaires.

29. Procédé selon l'une quelconque des revendications 18 à 28, **caractérisé en ce que** de l'eau est prélevée des produits finis après qu'ils quittent le réacteur sous pression (1) par l'intermédiaire de la sortie (5) lors d'une première phase de post traitement, et **en ce qu'**ils sont refroidis.

30. Procédé selon l'une quelconque des revendications 18 à 29, **caractérisé en ce que** des gaz combustibles sont obtenus à partir de produits finis lors d'une deuxième phase de posttraitement.

31. Procédé selon l'une quelconque des revendications 18 à 30, **caractérisé en ce que** des produits finis sont amenés sous une forme d'administration pour un combustible sec lors d'une troisième phase de posttraitement, qui a lieu après la première phase de posttraitement.
